# FASCICULE DE BREVET EUROPEEN

(11) **EP 2 128 881 B1**
(45) Date de publication et mention de la délivrance du brevet: **13.07.2011**
(21) Numéro de dépôt: 08305217.5
(22) Date de dépôt: 30.05.2008
(51) Int. Cl.: H01H 3/50, B60Q 1/14

(54) **Système d'indexation pour organe de commande sous volant**
Indexierungssystem für Steuerorgan unter dem Lenkrad
Indexing system for a control unit under the steering wheel

(43) Date de publication de la demande: 02.12.2009
(73) Titulaire: Delphi Technologies Inc., Troy, MI 48007 (US)
(72) Inventeur: Alleaume, Antoine, 67000, Strasbourg (FR); Lobstein, Roland, 67000, Strasbourg (FR)
(74) Mandataire: Robert, Vincent

(56) Documents cités:
- DE-A1- 2 003 628
- FR-A- 2 461 347
- US-A- 3 809 833
- US-A- 4 855 542
- US-B1- 6 281 453

## Description

La présente invention a trait à un système d'indexation pour organe de commande de type levier rotatif, par exemple pour une commande sous volant classique dotée d'un levier de manipulation permettant par exemple d'actionner les essuie-glaces ou les clignotants et de modifier les réglages liés à ces fonctions.

Classiquement, ces organes de commande comportent un levier extérieur, qui sert à l'utilisateur à exercer la manipulation, relié à une platine pivotante disposée dans le boîtier de commande et muni d'un doigt d'indexation relié à la platine via des moyens de rappel le repoussant au contact d'une came principale dotée d'une surface présentant plusieurs portions d'indexation.

En d'autres termes, lorsque l'utilisateur manipule le levier, il se produit un pivotement selon plusieurs positions angulaires distinctes stables, clairement identifiables par l'utilisateur du fait du passage du doigt d'indexation d'une portion à l'autre de la surface de la came. Ces portions sont en général des évidements coopérant avec une extrémité arrondie du doigt d'indexation, lesdits évidements étant séparés par des portions en saillie par exemple de type chevron dont le pic marque le passage d'une première position stable à une seconde position immédiatement adjacente, qui devient également stable lorsque le doigt arrive au fond du nouvel évidement.

Lorsque l'utilisateur manipule le levier dans le but de changer sa position et d'obtenir un nouveau réglage d'une fonction ou une fonction distincte, il arrive selon la sollicitation que le doigt d'indexation ne s'arrête pas dans la position initialement requise, mais qu'il continue et se retrouve de façon imprévue dans un évidement ultérieur non désiré de la came. C'est par exemple le cas lorsque le mouvement impulsé par l'utilisateur est très rapide. On attribue en général ce problème au fait que l'extrémité du doigt d'indexation ne reste pas en permanence au contact de la surface de la came.

Cela occasionne un second problème, moins crucial en termes de fonctionnement mais qui concerne directement le confort de l'utilisateur : lors du passage d'un évidement de la came à l'autre, le franchissement du pic peut donner lieu à une perte de contact momentanée, générant un bruit sec au moment de la reprise de contact qui s'effectue à proximité du fond de l'évidement suivant.

La présente invention se propose de remédier à ces inconvénients, en proposant une configuration de système d'indexation garantissant un déplacement plus harmonieux d'un doigt d'indexation primaire par rapport à la surface d'une came principale reprenant les configurations usuelles.

A cet effet, le système d'indexation de l'invention comporte notamment une came secondaire disposée en regard de la came principale, coopérant avec une protubérance formant le doigt d'indexation secondaire placé à l'opposé du doigt d'indexation primaire en vue de dupliquer le guidage opéré par la came principale lorsque le doigt d'indexation primaire perd le contact avec cette dernière.

L'addition d'une seconde came au système a clairement pour objectif d'empêcher ou à tout le moins de limiter les pertes de contact avec la came principale, telles qu'il s'en produit dans certains systèmes de l'art antérieur. La solution privilégiée, dans le cadre de l'invention, consiste à mettre en oeuvre une sorte de garde-fou dynamique matérialisé par la seconde came apte à coopérer avec un second doigt réalisant la même fonction d'indexation, mais uniquement dans le cas où, du fait d'une perte de contact, la came principale n'assure plus ladite fonction. En d'autres termes, dans le comportement dynamique du levier, la came secondaire n'est jamais active si le doigt d'indexation primaire reste au contact de la came principale.

Une telle solution a été décrite, par exemple dans le document US-A-3 809 833, dans lequel deux plots coulissant dans des évidements opposés d'une platine rotative coopèrent avec des cames d'un composant fixe entourant ladite platine, des ressorts rappelant lesdits plots au contact des cames.

Une solution similaire résulte par ailleurs du document US-A-4 855 542, avec des plots disposés symétriquement par rapport au levier de commande, et présentant un angle l'un par rapport à l'autre, que l'on retrouve par conséquent entre les cames.

Selon l'invention, le doigt d'indexation secondaire et la came secondaire sont disposés décalés, dans la direction de l'axe de pivotement, par rapport au doigt d'indexage principal et à la came principale, les deux doigts formant alors une configuration en S à l'extrémité libre du levier.

Une telle configuration s'explique par le fait que la came principale est disposée au même niveau que le doigt d'indexation primaire et la platine pivotante, alors que la came secondaire doit être décalée hors du volume précisément occupé par ledit doigt primaire, voire par ladite platine, sans quoi aucune interaction avec une came opposée ne serait possible.

Selon une configuration possible, la came secondaire peut être une reproduction quasi homothétique de la came primaire, le centre d'homothétie étant l'axe de pivotement de la platine supportant le levier.

Dans cette hypothèse, les deux cames se succèdent si l'on décrit l'axe longitudinal du levier vers son extrémité libre, et les deux doigts d'indexation se trouvent sur cet axe, en opposition.

Selon une possibilité, les doigts d'indexation primaire et secondaire sont deux protubérances d'allure hémicylindrique opposées d'axes parallèles coopérant avec des cames formant chacune en section une suite de chevrons.

Les chevrons peuvent être séparés par un évidement arrondi pour correspondre de manière plus précise à la configuration des protubérances hémicylindriques, un sommet à faible rayon de courbure marquant clairement la séparation entre deux évidements et envoyant à l'utilisateur une information claire en cas de franchissement.

De préférence, les chevrons formant la came secondaire peuvent être constitués d'une succession de sommets et d'évidements dont les rayons de courbures respectifs diminuent et augmentent si la distance entre les deux cames augmente.

Les sommets et évidements sont en principe séparés par des segments de droite, mais plus la distance entre les cames augmente, plus lesdits segments se raccourcissent jusqu'à disparaître, les évidements devenant des portions de courbe à mesure que le rayon de courbure augmente. Le rayon de courbure des sommets tend lui aussi à disparaître, et la came devient une succession d'arcs de cercles séparés par des pics.

De préférence, les moyens de rappel repoussent le doigt d'indexation vers l'extérieur de la platine, et ils sont constitués d'un ressort spiralé.

L'invention va à présent être décrite plus en détail, en référence aux figures annexées, pour lesquelles :
- la figure 1 représente un schéma de fonctionnement simplifié d'un système d'indexation classique avec une seule came ;
- la figure 2 montre schématiquement ce qui se produit lorsque le doigt d'indexation perd le contact avec la came ;
- la figure 3 montre, schématiquement et en vue de dessus, le fonctionnement à deux cames propre à l'invention ;
- la figure 4 représente une vue en perspective d'un système d'indexation selon l'invention ; et
- la figure 5 illustre schématiquement la modification de la forme de la came secondaire à mesure qu'elle est plus distante de la came primaire.

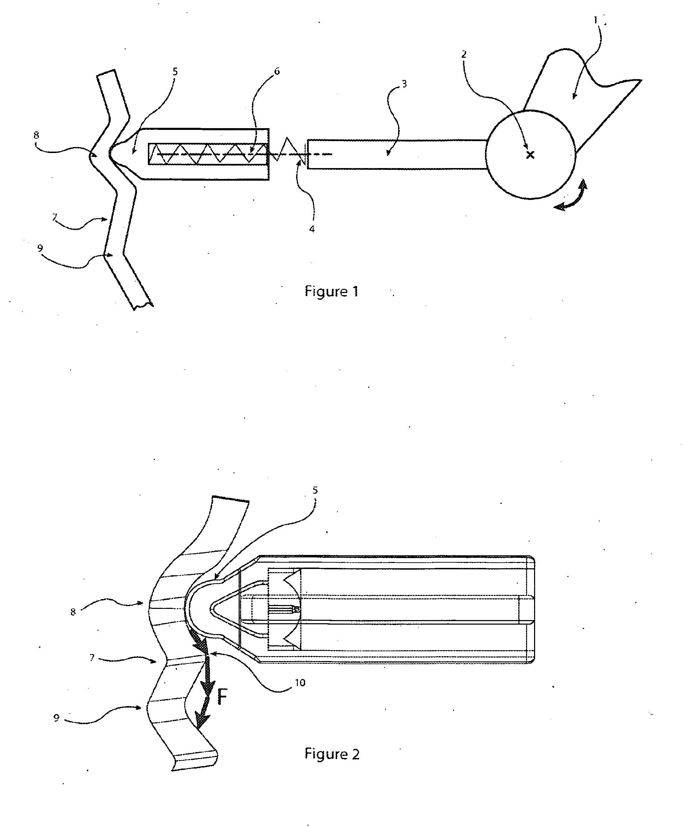

En référence à la figure 1, les systèmes d'indexation classiques comportent un levier (1) dont l'une des extrémités est articulée (en 2), par exemple au niveau d'une platine comportant des moyens mécaniques de maintien et de guidage (schématisés en (3)) d'un ressort de rappel (4) et d'un doigt d'indexation (5) selon un axe (6). L'extrémité, en l'espèce arrondie, du doigt d'indexation (5) coopère avec une came (7) présentant des chevrons successifs (8, 9). Lorsque l'utilisateur actionne le levier (1) de manière à faire pivoter l'ensemble levier (1) / platine (3) autour de l'axe de rotation (2), le doigt d'indexation (5) passe de l'évidement d'un chevron (8) à l'évidement d'un chevron (9) adjacent.

Cependant, comme déjà mentionné, et comme cela est montré en figure 2, un geste par exemple trop rapide peut entraîner un décollement de l'extrémité arrondie du doigt d'indexation (5), au moment du franchissement permettant au dit doigt (5) de passer du chevron (8) au chevron (9). L'arête de franchissement (10) marque le début de la perte de contact, entraînant le doigt d'indexation dans la direction des flèches F vers la paroi distale du chevron (9), avec laquelle il entre en contact en émettant un bruit. Selon le cas, et en particulier selon la vitesse imprimée au levier (1), le doigt d'indexation pourrait éventuellement ne pas s'arrêter dans le chevron (9), mais continuer vers un évidement ultérieur de la came (7).

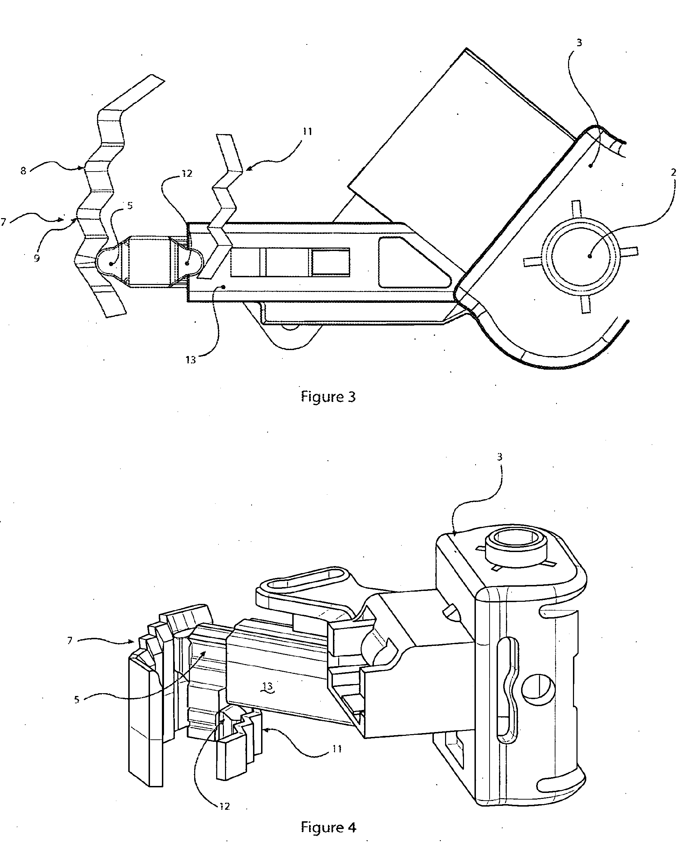

L'invention, telle que montrée en figure 3, résout le problème en proposant un doublage de la came. Outre la came principale (7), avec laquelle le doigt d'indexation primaire (5) coopère de manière traditionnelle, il est prévu une came secondaire (11) située en regard de la précédente, et qui coopère avec un doigt d'indexation secondaire (12) situé à l'opposé du doigt d'indexation (5).

Les chevrons de la came (11) sont dans un rapport homothétique avec ceux de la came principale (7), le centre de l'homothétie étant confondu à l'axe de rotation (2) de façon à ce que les fonds des évidements constitués par ces chevrons secondaires soient situés, en suivant l'axe (6) de déplacement du doigt d'indexation, au niveau d'une arête de séparation de deux chevrons de la came principale (7) et vice-versa.

Du fait du rapport homothétique, la distance séparant deux points situés sur toute ligne rejoignant les deux cames (7) et (11) et parallèle à l'axe (6) est sensiblement constante. Elle ne l'est pas de façon absolue car les formes des cames (7, 11) ont été adaptées de manière à optimiser le fonctionnement du levier.

Une telle configuration est nécessaire pour que le doigt d'indexation (5) puisse se rétracter à l'encontre des moyens de rappel (4) dans la platine (3) pour pouvoir passer d'un évidement à l'autre des chevrons.

Ce maintien en permanence du doigt d'indexation entre deux surfaces se développant parallèlement l'une à l'autre permet de rattraper toute perte de contact trop importante d'une part du doigt primaire (5), mais également du doigt secondaire opposée (12) avec leurs cames respectives (7, 11), et garantit un passage fluide et sans bruit parasite d'une position stable d'indexation à l'autre.

La figure 4 montre clairement que l'extrémité libre du doigt d'indexation (5), qui coulisse par ailleurs dans un logement (13) prévu à cet effet dans la platine (3) présente une configuration en S dont les extrémités sont constituées par les protubérances hémisphériques des doigts (5, 12). Cela résulte du fait que ces dernières sont décalées en hauteur, puisque la came (11) est nécessairement positionnée en dehors du logement (13). Compte tenu du positionnement relatif des cames (7) et (11), il existe toujours un guidage ferme, dans la direction de l'axe de coulissement des doigts d'indexage (5, 12), dû à l'existence du double guidage avec un jeu fonctionnel.

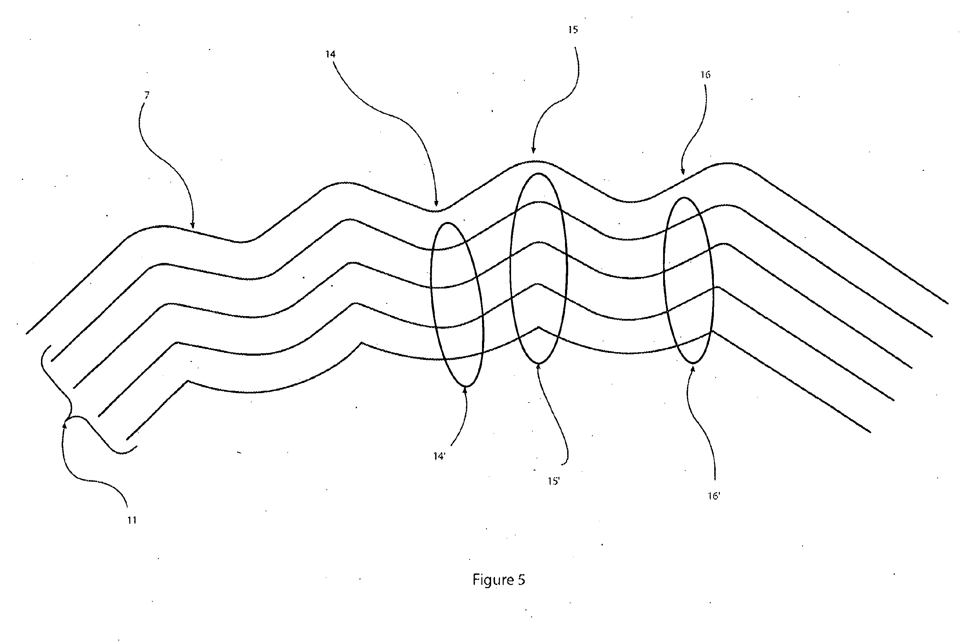

La figure 5 ne montre que des profils, respectivement le profil de la came principale (7) avec des sommets (14) et des évidements (15) reliés par des segments de droites (16) et les profils évolutifs de la came secondaire (11) pour différentes distances à la came (7). La came secondaire (11) la plus proche de la came principale (7) comporte des évidements (14') et sommets (15') ayant des rayons de courbure tels que des segments (16') de longueur bien marquée les séparent. A mesure que la distance entre les cames (7, 11) augmente, le rayon de courbure des évidements (14') augmente, celui des sommets (15') diminue et les segments (16') se raccourcissent (voir dans les ellipses).

Lorsqu'une certaine distance est atteinte, qui correspond par exemple à celle qui sépare la came (11) la plus éloignée de la came principale (7) sur la figure 5, le rayon de courbure des évidements (14') est suffisamment élevé pour que les segments (16') n'existent plus, et le rayon de courbure des sommets (15') a diminué de telle sorte que ces derniers soient des pics présentant un angle sommital.

C'est la raison pour laquelle on a fait état, dans le présent texte, d'une quasi homothétie, l'idée étant exacte aux modifications de formes évoquées ci-dessus près.

Les exemples illustrés par les figures ne sont pas exhaustifs de l'invention, qui englobe au contraire des variantes de forme et de configuration, notamment pour les cames, leurs évidements conduisant à des positions stables d'indexation, les protubérances, etc.

## Revendications

1. Système d'indexation pour organe de commande sous volant comportant un levier (1) de manipulation solidaire d'une platine pivotante (3), un doigt d'indexation (5) primaire relié à la platine (3) via des moyens de rappel (4) le repoussant au contact d'une came principale (7) munie d'une surface présentant plusieurs positions d'indexation pour ledit doigt (5), le système comportant une came secondaire (11) disposée en regard de la came principale (7), coopérant avec une protubérance formant le doigt d'indexation secondaire (12) placé à l'opposé du doigt d'indexation primaire (5) en vue de dupliquer le guidage opéré par la came principale (7) lorsque le doigt d'indexation primaire (5) perd le contact avec cette dernière (7), **caractérisé en ce que** le doigt d'indexation secondaire (12) et la came secondaire (11) sont disposés décalés, dans la direction de l'axe de pivotement, par rapport au doigt d'indexage (5) principal et à la came principale (7), les deux doigts (5, 12) formant une configuration en S à l'extrémité libre du levier (1)

2. Système d'indexation selon la revendication précédente, **caractérisé en ce que** la came secondaire (11) est une reproduction quasi homothétique de la came primaire (7), le centre d'homothétie étant l'axe (2) de pivotement de la platine supportant le levier (1).

3. Système d'indexation selon la revendication précédente, **caractérisé en ce que** les doigts d'indexation primaire (5) et secondaire (12) sont deux protubérances d'allure hémicylindrique opposées d'axes parallèles coopérant avec des cames (7, 11) formant chacune en section une suite de chevrons (8, 9).

4. Système d'indexation selon la revendication précédente, **caractérisé en ce que** les chevrons (8, 9) de la came principale (7) sont séparés par un évidement (15) arrondi pour correspondre de manière plus précise à la configuration des protubérances hémicylindriques, un sommet (14) à faible rayon de courbure marquant la séparation entre deux évidements (15).

5. Système d'indexation selon l'une quelconque des revendications précédentes, **caractérisé en ce que** les moyens de rappel repoussent le doigt d'indexation (5) vers l'extérieur de la platine (3), et sont constitués d'un ressort (4) spiralé.

## Claims

1. Indexing system for steering-wheel control organ comprising an operating lever (1) attached to a pivoting plate (3), a primary indexing finger (5) connected to the plate (3) via return means (4) pushing it into contact with a main cam (7) provided with a surface presenting a plurality of indexing positions for the said finger (5), the system comprising a secondary cam (11) arranged facing the main cam (7), co-operating with a protuberance forming the secondary indexing finger (12) placed opposite to the primary indexing finger (5) in order to duplicate the guiding performed by the main cam (7) when the primary indexing finger (5) loses contact with the latter (7),
**characterised in that** the secondary indexing finger (12) and the secondary cam (11) are arranged offset, towards the pivoting axis, relative to the main indexing finger (5) and to the main cam (7), the two fingers (5, 12) forming an S-shaped configuration at the free end of the lever (1)

2. Indexing system according to the preceding claim, **characterised in that** the secondary cam (11) is a quasi-homothetic reproduction of the primary cam (7), the centre of similarity being the pivoting axis (2) of the plate supporting the lever (1).

3. Indexing system according to the preceding claim **characterised in that** the primary (5) and secondary (12) indexing fingers are two opposed protuberances of semi-cylindrical shape of parallel axes co-operating with cams (7, 11) each in section forming a series of chevrons (8, 9).

4. Indexing system according to the preceding claim, **characterised in that** the chevrons (8, 9) of the main cam (7) are separated by a rounded hollow (15) to correspond more precisely to the configuration of the semi-cylindrical protuberances, an apex (14) of small radius of curvature marking the separation between two hollows (15).

5. Indexing system according to any one of the preceding claims, **characterised in that** the return means push the indexing finger (5) towards the outside of the plate (3), and are formed of a helical spring (4).

## Patentansprüche

1. Indexierungssystem für ein Stellteil unter einem Lenkrad, das Folgendes umfasst: einen Betätigungshebel (1) einstückig mit einer Schwenkplatte (3), einen primären Indexierfinger (5), der mit der Platte (3) über Rückstellmittel (4) verbunden ist, die ihn in Kontakt mit einer Hauptnocke (7) zurückdrücken, die eine Fläche mit mehreren Indexierpositionen für den genannten Finger (5) aufweist, wobei das System eine Nebennocke (11) umfasst, die gegenüber der Hauptnocke (7) angeordnet ist und mit einem Vorsprung zusammenwirkt, der den sekundären Indexierfinger (12) bildet, der dem primären Indexierfinger (5) entgegengesetzt platziert ist, um die von der Hauptnocke (7) bewirkte Führung zu duplizieren, wenn der primäre Indexierfinger (5) den Kontakt mit der genannten Hauptnocke (7) verliert,
**dadurch gekennzeichnet, dass** der sekundäre Indexierfinger (12) und die Nebennocke (11) in Richtung der Schwenkachse in Bezug auf den Hauptindexierfinger (5) und die Hauptnocke (7) versetzt angeordnet sind, wobei die beiden Finger (5, 12) eine S-Konfiguration am freien Ende des Hebels (1) bilden.

2. Indexierungssystem nach dem vorherigen Anspruch, **dadurch gekennzeichnet, dass** die Nebennocke (11) eine quasi-homothetische Reproduktion der Hauptnocke (7) ist, wobei das Homothetiezentrum die Schwenkachse (2) der den Hebel (1) tragenden Platte ist.

3. Indexierungssystem nach dem vorherigen Anspruch, **dadurch gekennzeichnet, dass** der primäre (5) und der sekundäre (12) Indexierfinger entgegengesetzt zueinander befindliche halbzylindrische Vorsprünge mit parallelen Achsen sind, die mit den Nocken (7, 11) zusammenwirken, die jeweils im Schnitt einen Satz von Pfeilen (8, 9) bilden.

4. Indexierungssystem nach dem vorherigen Anspruch, **dadurch gekennzeichnet, dass** die Pfeile (8, 9) der Hauptnocke (7) durch eine abgerundete Aussparung (15) getrennt werden, so dass sie der Konfiguration der halbzylindrischen Vorsprünge genauer entsprechen, wobei eine Spitze (14) mit kleinem Krümmungsradius die Trennung zwischen zwei Aussparungen (15) markiert.

5. Indexierungssystem nach einem der vorherigen Ansprüche, **dadurch gekennzeichnet, dass** die Rückstellmittel den Indexierfinger (5) zur Außenseite der Platte (3) zurückdrücken und von einer Spiralfeder (4) gebildet werden.
